# EUROPÄISCHE PATENTANMELDUNG

(11) **EP 3 282 136 A1**
(43) Veröffentlichungstag der Anmeldung: **14.02.2018**
(21) Anmeldenummer: 16183986.5
(22) Anmeldetag: 12.08.2016
(51) Int. Cl.: F16B 19/02, F16L 25/02

(54) **FLANSCHVERBINDUNG MIT SCHRAUBE**

(71) Anmelder: Siemens Aktiengesellschaft, 80333 München (DE)
(72) Erfinder: Karpat, Kürsad, 47445 Moers (DE); Zander, Uwe, 45475 Mülheim an der Ruhr (DE); Züch, Vitali, 46145 Oberhausen (DE)

(57) **Zusammenfassung**

Die Erfindung betrifft eine Flanschverbindung (1) zur Verbindung von zwei Bauteilen, die einander gegenüberliegende Flansche aufweist, wobei ein Verbindungselement (7) angeordnet ist, dass einen Schaft (11) aufweist, der zu einer Innenwand einer Bohrung (8, 9) einen radialen Spalt (13) aufweist und in diesen Spalt (13) eine Strahlungsbarriere in Form einer aus Metall gefertigten Blechhülse (15) angeordnet ist.

## Beschreibung

Die Erfindung betrifft eine Flanschverbindung zur Verbindung von Bauteilen, die einander gegenüberliegende Flansche und zumindest ein Verbindungselement aufweist, wobei das Verbindungselement in in den Flanschen eingebrachten, zueinander fluchtenden Bohrungen aufgenommen ist, wobei die Bohrungen in den Flanschen als Durchgangsbohrungen derart ausgestaltet sind, dass zwischen dem Verbindungselement mit seinem Schaft und einer jeweiligen Innenwand der Durchgangsbohrung ein radialer Spalt gebildet ist.

Desweiteren betrifft die Erfindung ein Verfahren zur thermischen Isolierung eines Verbindungselementes in einer Flanschverbindung.

Beim Bau von Strömungsmaschinen wie zum Beispiel Gasturbinen, Verdichter und Dampfturbinen, werden großvolumige Bauteile wie zum Beispiel Außengehäuse oder Innengehäuse verwendet. Die Innengehäuse als auch Außengehäuse werden üblicherweise als ein Oberteil und ein Unterteil ausgebildet, wobei in dem Ober- und Untergehäuse ein Rotor drehbar gelagert ist.

Es ist üblich, das Oberteil und das Unterteil mittels einer Flanschverbindung miteinander zu verbinden, wobei die Flanschverbindung Bohrungen aufweist, in die Schrauben angeordnet werden. Damit eine gute Verbindung entsteht, werden die Schrauben vorgespannt. Ab einer bestimmten Schraubengröße kann die gewünschte Verspannung zum einen nicht mehr mit Drehmoment erzeugt werden, zum anderen erzeugt der Kaltanzug einer Schraube mittels Drehmoment über die Reibung immer eine Torsionsbeanspruchung in der Schraube, die deren eigentliches Potential gegenüber einer rein längskraftbeanspruchten reduziert. Daher geschieht dies bei großen Schrauben in der Regel über thermische Verfahren, wie zum Beispiel einer Gasheizung oder einer elektrischen Apparatur z. B. mittels Induktionsprinzip oder durch hydraulische Verfahren. Dazu ist es noch bekannt, Schrauben gemäß dem Superbolt-Verfahren vorzuspannen.

Für die thermischen Anzugsverfahren müssen die Verfahrensparameter derart gewählt werden, dass zum einen eine Schädigung der Schrauben ausgeschlossen und eine ökonomische Durchführung möglich ist. Je weniger eine zu heizende Schraube in Wechselwirkung mit ihrem Umfeld steht, desto effektiver setzt sich die an ihr angelegte Heizleistung auch in die beabsichtige Längung der Schraube um.

Dies gilt auch für den Betrieb der Schraube, wo eine Wechselwirkung zwischen der Schraube und ihrem Umfeld deren Temperaturniveau entweder anhebt oder einen Temperaturgradienten in der Schraube beeinflusst.

Auch hier wäre eine geringere Wechselwirkung von Schraube und Umfeld zweckdienlich, um bestmögliche Kennwerte des Schraubenmaterials auch bei erhöhter Einsatztemperatur zu gewährleisten.

Der Wärmeübertrag über Wärmeleitung über das Gewinde und den Schraubenkopf bzw. die Mutter ist begrenzt.

Wünschenswert wäre daher, eine Barriere zur Reduzierung bis hin zur Vermeidung des Strahlungsaustausches einer Schraube zur Umgebung zu haben.

Es ist daher Aufgabe der Erfindung, eine verbesserte Flanschverbindung anzugeben.

Gelöst wird diese Aufgabe durch eine Flanschverbindung, die einander gegenüberliegende Flansche und zumindest ein Verbindungselement aufweist, wobei das Verbindungselement in in den Flanschen eingebrachten, zueinander fluchtenden Bohrungen aufgenommen ist, wobei die Bohrungen in den Flanschen als Durchgangsbohrungen derart ausgestaltet sind, dass zwischen dem Verbindungselement mit seinem Schaft und einer jeweiligen Innenwand der Durchgangsbohrung ein radialer Spalt gebildet ist, in der eine thermisch isolierende Hülse derart angeordnet ist, dass ein Wärmeübergang von den Flanschen zu dem Verbindungselement zumindest verringert wird.

Die Aufgabe wird auch gelöst durch ein Verfahren zur thermischen Isolierung eines Verbindungselementes in einer Flanschverbindung, wobei um das Verbindungselement eine Hülse angeordnet ist.

Die Erfindung geht von dem Gedanken aus, dass wenn eine Barriere zwischen zwei sehr unterschiedlichen warmen Oberflächen angeordnet wird, sich der Strahlungsaustausch deutlich reduziert. Neben Außenbeschichtungen auf dem Dehnschaft von Dehnschrauben oder Losteilen, wird hier erfindungsgemäß eine dünne metallische Blechhülse vorgeschlagen.

Die Bohrungen sind entweder in den beiden Flanschen als Durchgangsbohrungen ausgeführt oder zumindest in dem einen Flansch, der mit der Durchgangsborhung ausgeführt ist.

Vorteilhafte Weiterbildungen sind in den Unteransprüchen angegeben.

Die Ausführungsformen gemäß den Unteransprüchen können in beliebiger Weise miteinander kombiniert werden.

Die Verwendung von Strahlungsbarrieren reduziert die Zeitdauer thermischer Aufheizvorgänge während der Montage, aber auch die Temperatur von Schrauben in Einsatzbereichen, wo sich deren Temperaturfeld insbesondere über Wärmeleitung und Strahlung benachbarter, wärmerer Bauteile im Betrieb tendenziell erhöht. Die Folge ist, dass sich die Schraube wegen der reduzierten Temperatur durch höhere Relaxationsspannungen auszeichnet, die entweder ein kompakteres Design ermöglichen oder den Wechsel auf höherwertiges Schraubenmaterial hin zu höheren Einsatztemperaturen verschiebt. Idealerweise kann die Erfindung dazu führen, dass sich zudem Temperaturfelder in der Schraube vergleichmäßigen, was wiederum zu einer Vergleichmäßigung der Auslastung längs der Schraube im Betrieb führt.

In einer ersten vorteilhaften Weiterbildung ist die Hülse aus einem metallischen Blech ausgebildet.

In einer weiteren vorteilhaften Weiterbildung ist die Hülse in seiner Längsrichtung geschlitzt ausgebildet. Dadurch ist eine bessere Montage um das Verbindungelement möglich.

In einer weiteren vorteilhaften Weiterbildung ist die Hülse in den radialen Spalt entlang der Längsrichtung des Verbindungselements im Wesentlichen komplett angeordnet.

Der radiale Spalt kann sich durch eine Breite auszeichnen, wobei in einer weiteren vorteilhaften Weiterbildung die Hülse in der Mitte des Spaltes angeordnet ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Im Hinblick auf Ergänzungen der in der Zeichnung unmittelbar erkennbaren Lehren, wird auf den einschlägigen Stand der Technik verwiesen.

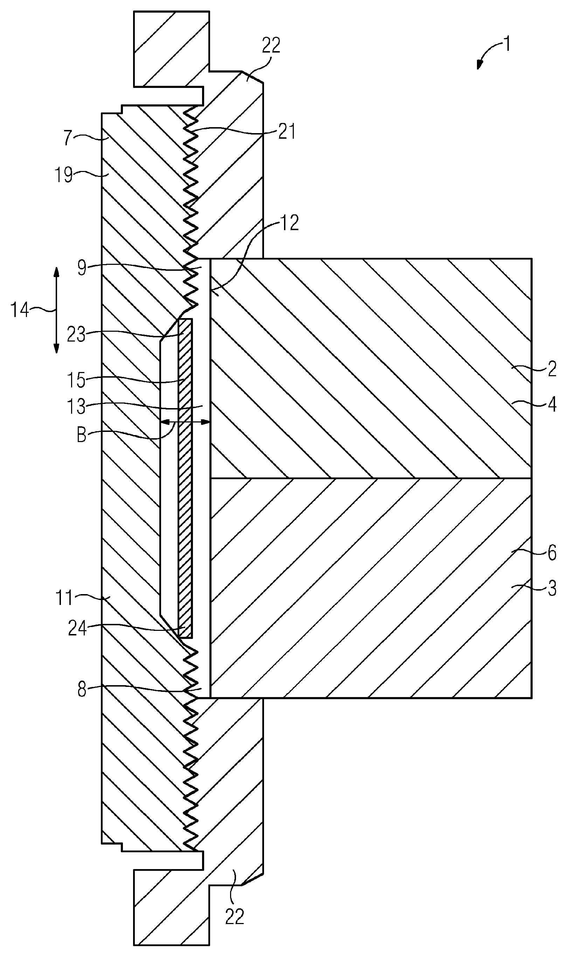

Figur 1 zeigt eine schematische Darstellung einer erfindungsgemäßen Flanschverbindung.

Die Figur 1 zeigt eine Flanschverbindung 1 zur Verbindung von Bauteilen 2, 3. Die Flanschverbindung 1 weist einander gegenüberliegende Flansche 4, 6 auf und zumindest ein Verbindungselement 7, wobei das Verbindungselement 7 in ein in den Flanschen 4, 6, eingebrachten, zueinander fluchtenden Bohrungen 8, 9 aufgenommen ist. Das eine Bauteil 2 kann ein Deckel sein. Das andere Bauteil 3 kann ein Außengehäuse einer Strömungsmaschine sein. Das Verbindungselement 7 ist zumindest mit seinem Schaft 11 thermisch von den Bauteilen 2, 3 bzw. den Flanschen 4, 6 getrennt, so dass ein Wärmeübergang von den Bauteilen 2, 3 bzw. von den Flanschen 4, 6 zu dem Verbindungselement 7 zumindest verringert bzw. gehemmt ist.

Die Bohrungen 8, 9 sind als Durchgangsbohrungen derart ausgestaltet, dass zwischen dem Verbindungselement 7 mit seinem Schaft 11 und einer jeweiligen Innenwand der Durchgangsbohrungen 8, 9 ein radialer Spalt 13 gebildet ist.

Der radiale Spalt 13 besitzt die Breite B.

Das Verbindungselement 7 weist eine Längsrichtung 14 auf.

In dem radialen Spalt 13 ist eine thermisch isolierende Hülse 15 angeordnet. Die thermische isolierende Hülse 15 wirkt derart, dass ein Wärmeübergang von den Bauteilen 2, 3 bzw. von den Flanschen 4, 6 zu dem Verbindungselement 7 zumindest verringert bzw. gehemmt ist.

Die Bauteile 2 und 3 sind als Gehäusehälften eines Innengehäuses beispielsweise einer Turbine, insbesondere einer Dampfturbine, ausgestaltet. Die Flansche 4, 6 sind jeweils einer Gehäusehälfte zugeordnet, so dass auch von einem Oberflansch bzw. Unterflansch gesprochen werden kann.

In dem dargestellten Ausführungsbeispiel ist das Verbindungselement 7 als Schraubenbolzen 19 ausgestaltet. Der Schraubenbolzen 19 weist an seinen freien Enden 21 jeweils ein Gewinde zur Aufnahme eines Konterelements 22 auf.

Die thermisch isolierende Hülse 15 ist aus einem dünnen Blech gefertigt und in seiner Längsrichtung 14 geschlitzt ausgebildet (nicht dargestellt). Somit kann die Hülse 15 leicht um das Verbindungselement 7 angeordnet werden.

Die Hülse 15 ist hierbei genau in der Mitte der Breite des radialen Spaltes 13 angeordnet. Hierbei kann das eine Ende 23 und das andere Ende 24 der Hülse 15 das Verbindungselement 7 berühren oder bewusst ein Spalt verbleiben, um Zusatzverspannungen aus unterschiedlicher thermischer Dehnung der Bauteile zu vermeiden.

## Patentansprüche

1. Flanschverbindung (1) zur Verbindung von Bauteilen (2, 3) ,
die einander gegenüberliegende Flansche und zumindest ein Verbindungselement aufweist,
wobei das Verbindungselement in in den Flanschen eingebrachten, zueinander fluchtenden Bohrungen (8, 9) aufgenommen ist,
wobei die Bohrungen (8, 9) in den Flanschen als Durchgangsbohrungen derart ausgestaltet sind, dass zwischen dem Verbindungselement (7) mit seinem Schaft (11) und einer jeweiligen Innenwand der Durchgangsbohrung ein radialer Spalt (13) gebildet ist,
in der eine thermisch isolierende Hülse (15) derart angeordnet ist, dass ein Wärmeübergang von den Flanschen zu dem Verbindungselement (7) zumindest verringert wird.

2. Flanschverbindung (1) nach Anspruch 1,
wobei die Hülse (15) aus einem metallischen Blech ausgebildet ist.

3. Flanschverbindung (1) nach Anspruch 1 oder 2,
wobei die Hülse (15) in seiner Längsrichtung (14) geschlitzt ausgebildet ist.

4. Flanschverbindung (1) nach einem der vorhergehenden Ansprüche,
wobei die Hülse (15) in dem radialen Spalt (13) entlang der Längsrichtung (14) des Verbindungselements (7) im Wesentlichen komplett angeordnet ist.

5. Flanschverbindung (1) nach einem der vorhergehenden Ansprüche,
wobei die Hülse (15) im Wesentlichen in der Mitte des radialen Spalts (13) angeordnet ist.

6. Flanschverbindung (1) nach einem der vorhergehenden Ansprüche,
wobei das Verbindungselement (7) an seinen freien Enden (21) jeweils ein Konterelement (22) trägt, das zu zugeordneten Flanschoberflächen thermisch isoliert ist, so dass ein Wärmeübergang von den Flanschen zu dem Verbindungselement (7) zumindest teilweise reduziert ist.

7. Flanschverbindung (1) nach einem der vorhergehenden Ansprüche,
wobei in Längsrichtung (14) gesehen die Hülse (15) jeweils ein Ende (24) aufweist und die Enden (24) berührend an dem Verbindungelement (7) anliegen.

8. Verfahren zur thermischen Isolierung eines Verbindungselements (7) in einer Flanschverbindung (1),
wobei um das Verbindungselement (7) eine Hülse (15) angeordnet wird.
